(19) Europäisches Patentamt
European Patent Office
Office européen des brevets

(11) **EP 3 954 976 B1**

(12) **EUROPEAN PATENT SPECIFICATION**

(45) Date of publication and mention
of the grant of the patent:
**06.12.2023 Bulletin 2023/49**

(21) Application number: **20190758.1**

(22) Date of filing: **12.08.2020**

(51) International Patent Classification (IPC):
*G01K 3/02* *(2006.01)* *G01K 7/42* *(2006.01)*

(52) Cooperative Patent Classification (CPC):
**G01K 7/42; G01K 3/02**

(54) **METHOD AND DEVICE FOR TEMPERATURE PREDICTION**

VERFAHREN UND VORRICHTUNG ZUR TEMPERATURVORHERSAGE

PROCÉDÉ ET DISPOSITIF DE PRÉDICTION DE TEMPÉRATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**16.02.2022 Bulletin 2022/07**

(73) Proprietor: **Baumer A/S
8210 Arhus (DK)**

(72) Inventors:
• **Jensen, Kurt Möller
8700 Horsens (DK)**
• **Dawood, Martin
8000 Aarhus (DK)**

(74) Representative: **Strauss, Steffen
Baumer Innotec AG
Hummelstrasse 17
Group Intellectual Property
8501 Frauenfeld (CH)**

(56) References cited:
**JP-A- S60 114 729** **US-A1- 2005 041 722**
**US-A1- 2010 169 050** **US-A1- 2010 324 851**

• **Anonymous: "Forecast Combination Model
Specification Window", , 1 January 1999
(1999-01-01), XP055761186, Retrieved from the
Internet:
URL:https://web.archive.org/web/2004042722
2838/https://v8doc.sas.com/sashtml/ets/cha
p25/sect8.htm [retrieved on 2020-12-17]**
• **Rozante J. R. ET AL: "Multi-model ensemble:
technique and validation", Geoscientific Model
Development Discussions, 14 October 2014
(2014-10-14), pages 1-12, XP093054937, DOI:
10.5194/gmdd-7-2933-2014 Retrieved from the
Internet:
URL:https://www.researchgate.net/profile/D
emerval-Moreira/publication/274679130_Mult
i-model_ensemble_Technique_and_validation/
links/5645e90408ae9f9c13e72365/Multi-model
-ensemble-Technique-and-validation.pdf
[retrieved on 2023-06-16]**

EP 3 954 976 B1

**Description**

TECHNICAL FIELD TO WHICH THE INVENTION RELATES

The present invention relates to a method and a device for predicting an end temperature of a temperature change affecting a temperature-sensitive system e.g. a sensor system, such as, but not exclusively a conductivity sensor.

BACKGROUND ART

In numerous scientific and industrial applications, temperature-sensitive physical parameters require continuous or periodic quantification by use of a measurement system. Under real conditions, sudden changes from an initial temperature to an end temperature are often unavoidable, sometimes even necessary, and can influence the accuracy of employed measuring methods as well as results output by the measurement system. If such temperature changes go unnoticed, a discrepancy between the actual values of the physical parameters and the measured values can arise posing a threat to safety and/or impairing the application's quality.

For temperature surveillance purposes, temperature sensors can be integrated in the measurement system, in order to monitor the prevalent temperature and prompt a temperature compensation aimed at eliminating the discrepancy between the actual values and the measured values. However, to effectively conduct such a temperature compensation, the scale of the temperature change needs to be determined. Conventional temperature sensors have to fully heat up or cool down to the end temperature, in order to determine the scale of the temperature change. A delay caused by heat-transfer-related thermal inertia may thus result in a tardy registration of the end temperature. This may leave little to no time for reacting to the temperature change.

In consequence an user of known temperature compensated measurements systems has to wait for receiving temperature compensated values of the physical parameter as long as the system needs to compensate the delay caused by heat-transfer-related inertia, which may finally result in a not acceptable performance of the measurement system in case of time critical applications.

US 2010 0169 050 A1 relates to temperature sensors and thermal mass flow meters. The system from document US2010/0169050A1 finds the rate of change of the sensor signal, multiplies it by the time constant of the sensor signal and adds the result to the instantaneous value of the sensors signal to predict the final value of the temperature.

US 2017 176 234 A1 discloses an electronic clinical thermometer capable of estimating the temperature, characterized as comprising a temperature measuring device. The thermometer uses a time-rate of change in temperature. In document US 2017 176 234 A1 the temperature differential as a difference between the current temperature and the temperature measured 0.5 seconds earlier is calculated and monitored.

JP S60 114729 A discloses an electronic body temperature needle. In JP S60 114729 A a Kalman Filter is used to obtain an estimated value.

US 2010 324 851 A1 discloses a method for determining the exhaust gas temperature of a vehicle motor using a temperature probe comprising a temperature sensor and a protective tube. In US 2010 324 851 A1 a temperature is determined using a time constant tau.

TECHNICAL OBJECT TO BE ACHIEVED

The object of the present invention is to provide improved means for registering a temperature change with minimal delay and high accuracy, while overcoming at least some of the above-mentioned disadvantages.

DISCLOSURE OF INVENTION

The object is achieved by a method for predicting an end temperature of a temperature change for temperature surveillance purposes, the method comprising the steps of inputting at least one measured temperature value into a first temperature prediction model and into a second temperature prediction model, wherein the at least one measurement value is acquired by a temperature sensor, calculating a first predicted temperature based on the first temperature prediction model, calculating a second predicted temperature based on the second temperature prediction model, and calculating a final predicted temperature from the first predicted temperature and the second predicted temperature.

It is to be understood that the term "temperature change" may refer to a gradual change in temperature as well as an abrupt temperature jump from an initial temperature to an end temperature. Further, it is to be understood that the temperature change may take place in positive or negative direction i.e., the initial temperature may be lower or higher than the end temperature. In other words, the temperature may rise or fall in the course of the temperature change.

The method may, for example, be a computer-implemented method executed by a computational device, such as a computer or a dedicated temperature prediction device, which will be described further below.

Due to the predictive nature of temperature prediction models, which will be described in further detail below, the inventive method is advantageous since the at least one measured temperature value, which is input, can be a temperature value lying between the initial temperature and the end temperature and does not necessarily have to be the actual end temperature of the temperature change itself. Therefore, the final predicted temperature can be calculated before the end temperature is actually measured by a temperature sensor. Thereby, limitations caused by heat-transfer-related thermal inertia are mitigated and consequently the time delay is minimized. By combining the results of two temperature prediction models into the final predicted temperature, the inventive method further can achieve a higher accuracy than a method employing only one of the prediction models.

The solution above may be further improved by adding one or more of the following optional features. Each optional feature may be used for both improving the method and the temperature prediction device. Each optional feature is advantageous on its own and may be combined independently with any other optional feature.

According to one possible embodiment of the method, the first predicted temperature and the second predicted temperature may be calculated in parallel for time-saving purposes. In other words, the calculation steps of the first and second predicted temperature may be conducted synchronously.

According to another possible embodiment of the method, the first temperature prediction model and the second temperature prediction model may be different. In particular, both temperature prediction models may employ mathematical equations, which differ in at least one mathematical term. Preferably, each temperature prediction model exhibits a distinct set of mathematical equations different from the other temperature prediction model. By combining and utilizing these distinct sets of mathematical equations, advantageous characteristics of each temperature prediction model can be exploited.

According to yet another possible embodiment of the method, the final predicted temperature may be calculated so as to lie between the first predicted temperature and the second predicted temperature. In particular, an arithmetic mean, a geometric mean, a weighted mean or any other suitable mean value of the first predicted temperature and the second predicted temperature may be calculated. Thereby, the results of both models can be averaged out and a potential runaway of one predicted temperature can be balanced by the respective other predicted temperature.

Optionally, the method may further comprise the step of registering the end temperature of the temperature change. In particular, the end temperature may be identified as a steady-state end temperature. In other words, when a stable temperature level with a deviation of less than 0.005 kelvin is reached and maintained for more than 1.5 seconds, said temperature level is registered as the end temperature of the temperature change.

After registering the end temperature, the method may comprise the steps of calculating a deviation between the registered end temperature of the temperature change and at least one of the first predicted temperature and the second predicted temperature, and adjusting at least one of the first temperature prediction model and the second temperature prediction model based on the deviation. In particular, the deviation may be calculated as a difference, a quotient or by means of any other mathematical equation allowing a comparison between the registered end temperature and the respective predicted temperature. This adjustment may take place after the final predicted temperature has been calculated as an accuracy improvement in preparation for a next temperature change.

It is to be understood that the term "next temperature change" refers to a future temperature change, to which the inventive method has not yet been applied. Analogously, the term "previous temperature change" will be used for a past temperature change, to which the inventive method has already been applied.

Optionally, the method may further comprise the steps of recording the end temperature of at least the most recent, previous temperature change. Preferably, the end temperature of the most recent, previous temperature change is saved into at least one of the first temperature prediction model and the second temperature prediction model. Thereby, the end temperature of the most recent, previous temperature change can be utilized together with the at least one measured temperature value to calculate the corresponding predicted temperature e.g., by means of linear extrapolation. Linear extrapolation represents an easy to implement prediction model with comparatively few required calculation steps.

Naturally, the temperature prediction models are not limited to linear extrapolation. Other means of estimation may also be utilized as will be described in further detail below.

According to another possible embodiment of the method, at least one of the temperature prediction models i.e., at least one of the first temperature prediction model and the second temperature prediction model, may underestimate the end temperature of the temperature change. In other words, at least one of the temperature prediction models may be inherently conservative. In particular, one of the temperature prediction models may provide more conservative estimations than the other one of the temperature prediction models. This is to prevent an overestimation or underestimation of the end temperature, which could lead to an unnecessary temperature alarm e.g., causing an unjustified interruption in a chemical production plant.

According to the invention, the at least one measured temperature value is acquired by a temperature sensor. The temperature sensor may be a thermocouple, a resistance temperature detector or any other sensor suitable for measuring temperature. The temperature sensor may be integrated inside a sensor system in order to measure the temperature as close as possible to the area of interest. This will be described further below.

For increased accuracy of the temperature prediction models, multiple measured temperature values may be input into the first and second temperature prediction models. In particular, the measured temperature values may be continuously or periodically input into the first and second temperature prediction models. Preferably, the measured temperature values may be input as an online temperature surveillance.

Optionally, at least one of the first and second temperature prediction model may employ the step of calculating temperature change values from the input measured temperature values. In order to save computational effort and if both temperature prediction models require temperature change values, the calculation of temperature change values may be conducted prior to input into the first and second prediction models. The calculated temperature change values may then be input in addition to the measured temperature values.

The first temperature prediction model may further employ the steps of comparing successive temperature change values, identifying an increase in the temperature change values, identifying a maximum in the temperature change values, and performing an estimation of the corresponding predicted temperature based on the identified maximum in the temperature change values. Thereby, the corresponding predicted temperature can be estimated at the time of the maximum in the temperature change values.

This is particularly advantageous, since system responses to temperature changes are usually characterized by an initial divergence from the initial temperature, followed by a comparatively steep temperature curve section and completed by an asymptotic approach towards the end temperature. During said asymptotic approach, the prevalent temperature gradient is flattened, whereby the driving force of the heat transfer is weakened. Therefore, said asymptotic approach takes up a majority of the time of the temperature change. The ability to estimate the corresponding predicted temperature at the time of the maximum in the temperature change values thus represents a significant temporal advantage. According to another possible embodiment of the method, the estimation may be an extrapolation to the corresponding predicted temperature. In particular, the estimation may comprise the steps of calculating an accumulated temperature change from the time of the increase in the temperature change values to the time of the maximum in the temperature change values, and adding the accumulated temperature change multiplied by a characteristic factor to the measured temperature value at the time of the maximum in the temperature change values.

After each estimation, the characteristic factor, may be one of increased, if the end temperature of the temperature change was underestimated, and decreased, if the end temperature of the temperature change was overestimated. In particular, the increase and decrease of the characteristic factor may be proportionate to the above described deviation, respectively. Thus, the accuracy of the estimation may be continuously and automatically improved. The method may especially be employed without requiring calibration, due to the self-adjusting nature of the characteristic factor.

It is to be understood that the terms "underestimation" and "overestimation" refer to a state where the above-described deviation occurred. In particular, the end temperature was underestimated, if the corresponding predicted temperature was lower for a positive temperature change and higher for a negative temperature change. Analogously, the end temperature was overestimated if the corresponding predicted temperature was higher for a positive temperature change and lower for a negative temperature change. An optional threshold value may be defined, wherein a deviation with an absolute value below the threshold value is ignored in order to prevent over-correction.

Optionally, the characteristic factor may be a gain factor characterizing the relation between a first temperature region and a second temperature region of the temperature change. The first temperature region may correspond to the accumulated temperature change from the time of the increase in the temperature change values to the time of the maximum in the temperature change values. The second temperature region may correspond to an accumulated temperature change from the time of the maximum in the temperature change values to the time of reaching the end temperature.

Preferably, the gain factor may be the quotient of the second temperature region divided by the first temperature region. In other words, the product of the first temperature region and the gain factor equals the second temperature region. Consequently, a multiplication of the gain factor with the accumulated temperature change from the time of the increase in the temperature change values to the time of the maximum in the temperature change values results in an expected accumulated temperature change from the time of the maximum in the temperature change values to the time of reaching the end temperature. An addition of said expected accumulated temperature change to the measured temperature value at the time of the maximum in the temperature change values yields the corresponding predicted temperature.

It has been found that said relation between the first temperature region and the second temperature region represented by the gain factor is unique for a given system and independent of the scale and direction of a temperature change. Thus, the temperature prediction model utilizing the gain factor provides a scientifically grounded temperature prediction based on thermal characteristics of the corresponding system.

During initial use of the inventive method, an initial value for the gain factor may be used, which is pre-defined, e.g. by a service provider or system manufacturer.

According to another possible embodiment, the second temperature prediction model may employ a polynomial equation with polynomial coefficients for calculating the corresponding predicted temperature. Polynomial equations are advantageous, since they represent easily computable and adaptable equations. In particular, the polynomial equation may be a first-order polynomial or a polynomial of a higher order.

Optionally, at least one polynomial coefficient of the polynomial equation is a weighted coefficient containing weight factors, and wherein the weight factors are optimized for preventing one of an overestimation and underestimation of the end temperature of the temperature change. In particular, the weight factors may be optimized by a supervised learning algorithm aimed at preventing one of an overestimation and underestimation of the end temperature of the temperature change. For example, the weight factors may be forced by the supervised learning algorithm to behave as attenuation factors. The corresponding temperature prediction model may thus be provided with an inherently conservative characteristic as mentioned above.

Additionally or alternatively, the supervised learning algorithm may be aimed at improving a response time of the corresponding temperature prediction model. In particular, the supervised learning algorithm may be aimed at shortening the time, which the temperature prediction model requires for calculating the corresponding predicted temperature in a sufficiently accurate manner.

After each temperature change, at least one polynomial coefficient may be updated by or based on the previous temperature change. For example, the weight factors may be updated by the supervised learning algorithm after each temperature change. Thereby, the corresponding prediction model can be steadily improved in its accuracy.

Alternatively, the weight factors may be fixedly set as optimized default values, which are defined prior to employing the inventive method e.g., by a service provider or system manufacture. This can save computational effort.

In order to reduce the effect of noise, invalid measurement and/or signal spikes, the measured temperature values may be filtered before being input into the first temperature prediction model and the second temperature addiction model. For this, an electronic filter, a digital filter or an optical filter may be utilized. Preferably, the utilized filter has a time constant, which is lower than the thermal time constant of the at least one temperature sensor. In particular, a filter calculating and outputting the average value of e.g. the past four measured temperature values may be utilized, wherein the past four measured temperature values are acquired within a time frame shorter than the thermal time constant of the at least one temperature sensor. Alternatively, other filters such as FIR filters or lowpass filters may be also used.

The initial object is further achieved by a temperature prediction device comprising a temperature value processing unit for performing the method according to any one of the embodiments explained above and optionally at least one temperature sensor for acquiring the measured temperature values.

The temperature prediction device is advantageous, since it adopts the features and advantages of the inventive method explained above. In particular, the temperature value processing unit can be configured to implement any of the above described steps of inputting, calculating, adjusting, updating, filtering, comparing, identifying, registering and performing the estimation as part of an algorithm. Therefore, the temperature prediction device is readily installable into the sensor system for temperature surveillance purposes. As described above, for certain embodiments, this installation does not even require calibration. Moreover, a single temperature sensor advantageously suffices for the temperature prediction device to function, since the calculations of the respective temperature prediction models can be performed based on the same measured temperature values.

Alternatively or additionally, the temperature prediction device comprises a sensor interface for connecting a temperature sensor. In this case, a pre-existing temperature sensor of the sensor system may be utilized. Consequently, the temperature prediction device does not have to comprise the at least one temperature sensor itself. This is particularly advantageous for retrofitting the temperature prediction device into the sensor system.

As a measure of redundancy, the temperature prediction device may also comprise two or more temperature sensors. In particular, at least one of the two or more temperature sensors may serve as a spare sensor in order to reduce the effect of a potential sensor failure.

Further, the temperature prediction device, especially the temperature value processing unit, may comprise means for outputting a temperature signal, which is representative for the final predicted temperature. Accordingly, the inventive method may further comprise the step of outputting the temperature signal. In particular, the temperature signal may be one of a digital signal and analog signal. The digital signal may be a signal comprising numbers, which represent the final predicted temperature in Kelvin. The analog signal may be an analog voltage signal proportionate to the final predicted temperature in Kelvin. The measurement unit of the temperature signal may obviously be adapted according to the application.

Although several aspects of the inventive method have been described above with reference to units of the temperature prediction device, it is possible that these units are, at least partly, functional elements incorporated in the software executed by the temperature prediction device. Cumulatively or alternatively, the units may also be at least partly represented in the hardware of the temperature prediction device.

In the following, exemplary embodiments of the invention are described with reference to the drawings. The embodiments shown and described are for explanatory purposes only. The combination of features shown in the embodiments may be changed according to the foregoing description. For example, a feature that is not shown in an embodiment but described above may be added if the technical effect associated with this feature is beneficial for a particular application. On the other hand, a feature shown as part of an embodiment may be omitted as described above, if the technical effect associated with this feature is not needed in a particular application.

In the drawings, elements that correspond to each other with respect to function and/or structure have been provided with the same reference numeral.

In the drawings:

Fig. 1    shows a schematic representation of a block diagram of a sensor system according to one possible embodiment of the present disclosure;

Fig. 2    shows a schematic representation of a detailed view of a block diagram of a temperature prediction device according to one possible embodiment;

Fig. 3    shows a schematic representation of a diagram containing a temporal profile of temperature change values resulting from a temperature change; and

Fig. 4    shows a schematic representation of a diagram containing a temporal temperature profile resulting from a temperature change.

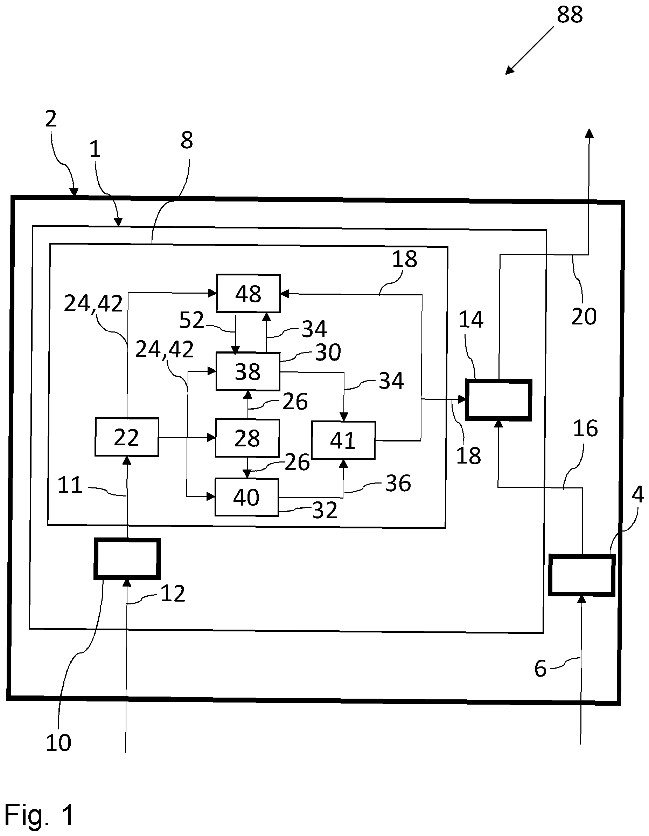

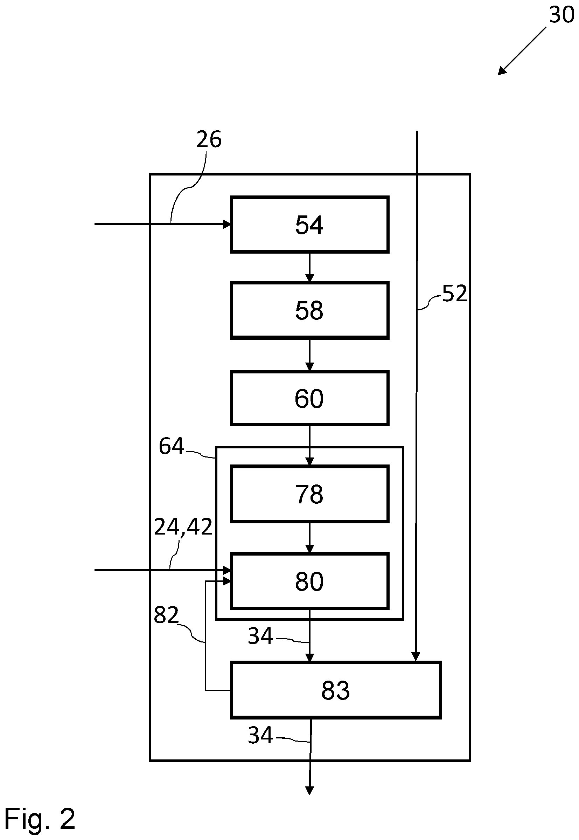

In the following, the structure of possible embodiments of a temperature prediction device 1 and a sensor system 2 according to the present invention is explained with reference to the exemplary embodiments shown in Figs. 1 and 2. Further, Figs. 1 to 4 are used for explaining the inventive method according to the present invention. The method may, for example, be an algorithm executed by a computational device such as a computer or the temperature prediction device 1. A computational device may be any code-executing device.

Fig. 1 shows an exemplary block diagram of the sensor system 2 according to one possible embodiment of the present invention, the sensor system 2 comprising a temperature prediction device 1 and at least one main sensor 4 for measuring a temperature-sensitive physical parameter 6 such as electrical conductivity.

The temperature prediction device 1 and/or the sensor system 2 may be part of a computer system 88. The computer system 88 may be a hard-wired system, in which the temperature prediction device 1 and/or the sensor system 2 is included. Further, the computer system 88 may comprise a combination of hardware and software.

The temperature prediction device 1 may comprise a temperature value processing unit 8 and, optionally, at least one temperature sensor 10 for measuring at least one temperature value 12. Preferably, multiple measured temperature values 11 may be acquired by the at least one temperature sensor 10. Even more preferably, the measured temperature values 11 may be continuously or periodically acquired by the at least one temperature sensor 10 and input into the temperature value processing unit 8. In particular, the at least one temperature sensor 10 and the temperature value processing unit 8 may serve as online temperature surveillance.

As can further be seen in Fig. 1, the temperature prediction device 1 may further comprise a temperature compensation unit 14 for conducting a temperature correction on a measurement value 16 of the at least one main sensor 4. Said temperature correction may be conducted based on a final predicted temperature 18 output by the temperature value processing unit 8, as will be described in detail further below. Thereby, a corrected value 20 of the temperature-sensitive physical parameter 6 may be output by the sensor system 2 in general and by the temperature compensation unit 14 in particular.

In the following, several aspects of the inventive method will be described with reference to the units 8, 14 of the temperature prediction device 1. It is to be understood that these units 8, 14 can, at least partly, be or contain functional elements incorporated in software executed by the temperature prediction device 1. Cumulatively or alternatively, units 8, 14 may also be at least partly represented in the hardware of the temperature prediction device 1.

The input temperature values 11 may be filtered in a filtering step 22 before being further processed by the temperature value processing unit 8. For this, an electronic filter, a digital filter or and optical filter, preferably with a low time constant, may be utilized. In particular, a filter calculating and outputting the average value 24 of e.g., the past four measured temperature values 11 may be utilized. Consequently, the filtering step 22 may also include recording the measured temperature values 11.

Optionally, temperature change values 26 may be calculated from the filtered temperature values 42 in a calculation step 28. These calculated temperature change values 26 may then be further processed in the temperature value processing unit 8 in addition to the filtered temperature values 42.

As is shown in Fig. 1, the filtered temperature values 42 and optionally the calculated temperature change values 26 may be input into a first temperature prediction model 30 and a second temperature prediction model 32. If only one of the first temperature prediction model 30 and the second temperature prediction model 32 requires temperature change values 26, the calculation of temperature change values 26 may be carried out and input only into the corresponding temperature prediction model.

A first predicted temperature 34, based on the first temperature prediction model 30, as well as a second predicted temperature 36, based on the second temperature prediction model 32, are calculated in calculation steps 38, 40. As indicated in Fig. 1, the first predicted temperature 34 and the second predicted temperature 36 are calculated in parallel. The first temperature prediction model 30 and the second temperature prediction model 32 may be different in order to combine advantageous characteristics of each temperature prediction model. Alternatively, the first temperature prediction model 30 and second temperature prediction model 32 may be the same for reasons of redundancy.

Thereafter, the final predicted temperature 18 is calculated from the first predicted temperature 34 and the second predicted temperature 36 in a calculation step 41. The final predicted temperature 18 may be calculated so as to lie between the first predicted temperature 34 and the second predicted temperature 36. In particular, an arithmetic mean, a geometric mean, a weighted mean or any other suitable mean value of the first predicted temperature 34 and the second predicted temperature 36 may be calculated to yield the final predicted temperature 18. As already briefly mentioned above, the final predicted temperature 18 may be input into the temperature compensation unit 14 for conducting the temperature correction on the measurement value 16, if necessary.

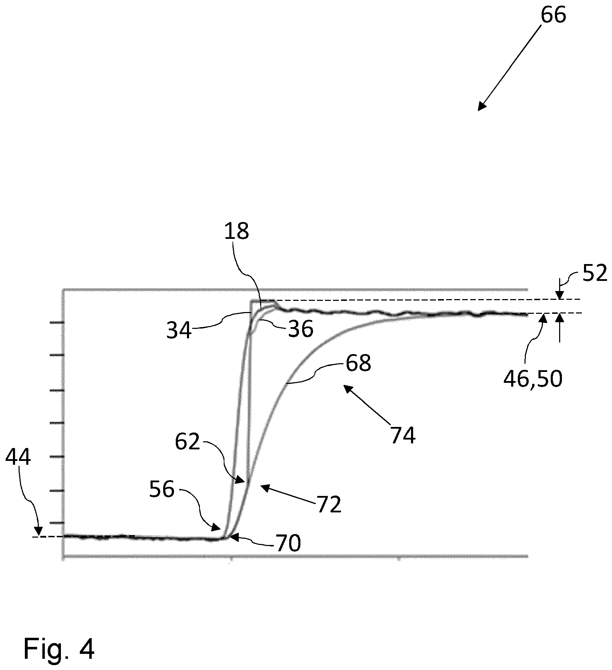

In case a temperature change, such as a gradual change in temperature or an abrupt temperature jump from an initial temperature 44 (see Fig. 4) to an end temperature 46 (see Fig. 4) occurs and affects the at least one main sensor 4, the temperature correction can be performed before the end temperature 46 of the temperature change is actually measurable by the at least one temperature sensor 10. This is due to the predictive nature of the temperature prediction device 1, which will be described in further detail below.

The calculation of the final predicted temperature 18 may further be used to trigger an adjusting step 48, in which at least one of the first temperature prediction model 30 and the second temperature prediction model 32 is improved with regard to its accuracy. In the shown exemplary embodiment of Fig. 1, the adjusting step 48 is applied to the first temperature prediction model 30. For this, the end temperature 46 of the temperature change is registered from the filtered temperature values 42. In particular, the end temperature 46 is identified as a steady-state end temperature 50 (see Fig. 4). Thereafter, a deviation 52 (see Fig. 4) between the registered end temperature 46 and the first predicted temperature 34 is calculated. The first temperature prediction model 30 is then adjusted based on said deviation 52. This will be described in further detail below with reference to Fig. 2.

Additionally or alternatively, the adjusting step 48 may be applied to the second temperature prediction model 32.

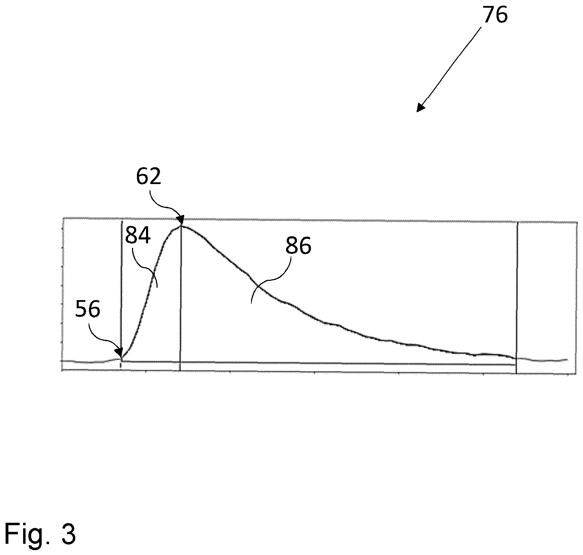

Fig. 2 shows a detailed view of an exemplary block diagram of the temperature prediction device 1, particularly of the first temperature prediction model 30. The first temperature prediction model 30 may employ a comparing step 54, in which successive temperature change values 26 are compared to each other. If present, an increase 56 (see Fig. 3) in the temperature change values 26 is identified in an identifying step 58. Another identifying step 60 is utilized to identify a maximum 62 (see Fig. 3) in the temperature change values 26. Thereafter, the first predicted temperature 34 is estimated based on the identified maximum 62 in an estimation step 64.

As can be seen in the temporal temperature profile 66 of Fig. 4, a system response 68 e.g., to an abrupt temperature change, is usually characterized by an initial divergence 70 from the initial temperature 44, followed by a comparatively steep temperature curve section 72 and completed by an asymptotic approach 74 towards the end temperature 46. The corresponding temporal profile 76 of the temperature change values 26 is shown qualitatively in Fig. 3. It is evident that during the temperature change, the asymptotic approach 74 takes up a majority of the time. Therefore, performing the estimation step 64 at the time of the maximum 62 in the temperature change values 26 represents a significant temporal advantage over a sensor system using only a conventional temperature sensor for temperature surveillance.

In the shown embodiment of Fig. 2, the estimation comprises a calculation step 78 for calculating an accumulated temperature change $\Delta T_1$ from the time $t_{inc}$ of the increase 56 to the time $t_{max}$ of the maximum 62. In particular, the accumulated temperature change $\Delta T_1$ may be calculated as a sum of the respective temperature change values 26 denoted by the symbol $\Delta\vartheta(t)$ in the following equation:

$$\Delta T_1 = \sum_{t_{inc}}^{t_{max}} \Delta\vartheta(t)$$

Thereafter, another calculation step 80 may follow, in which the first predicted temperature 34 is calculated by adding the accumulated temperature change $\Delta T_1$ multiplied by a characteristic factor 82 to the measured temperature value 11 at the time $t_{max}$ of the maximum 62. In the following equation representing the calculation step 80, the first predicted temperature 34 is denoted by the symbol $\vartheta_1$, while the measured temperature value 11 at the time $t_{max}$ is denoted by the symbol $\vartheta(t_{max})$ and the characteristic factor 82 by the symbol $G_0$:

$$\vartheta_1 = \vartheta(t_{max}) + \Delta T_1 \cdot G_0$$

The characteristic factor 82 may be a gain factor characterizing the relation between a first temperature region 84 (see Fig. 3) and a second temperature region 86 (see Fig. 3) of the temperature change. The first temperature region 84 may correspond to the accumulated temperature change $\Delta T_1$. The second temperature region 86 may correspond to an accumulated temperature change $\Delta T_2$ from the time $t_{max}$ to the time $t_{end}$ of reaching the end temperature 46:

$$\Delta T_2 = \sum_{t_{max}}^{t_{end}} \Delta\vartheta(t)$$

In particular, the characteristic factor 82 may be the quotient of the second temperature region 86 divided by the first temperature region 84:

$$G_0 = \frac{\Delta T_2}{\Delta T_1}$$

This relation between the first temperature region 84 and the second temperature region 86 is unique for the sensor system 2 due to its thermal characteristics and is independent of the temperature change. Consequently, a multiplication of the characteristic factor 82 with the accumulated temperature change $\Delta T_1$ results in an expected temperature change $\Delta T_{2,exp}$ from the time $t_{max}$ to the time $t_{end}$. By adding said expected temperature change $\Delta T_{2,exp}$ to the measured temperature value 11, the first predicted temperature 34 can be obtained:

$$\vartheta_1 = \vartheta(t_{max}) + \Delta T_1 \cdot G_0 = \vartheta(t_{max}) + \Delta T_{2,exp}$$

As can be seen, the first predicted temperature 34 can be calculated with values, which are available before the end temperature 46 of the temperature change is registered by the at least one temperature sensor 10. Thereby the first temperature prediction model 30 provides the temperature prediction device 1 with a predictive nature.

The above-mentioned adjusting step 48 may be performed after each estimation step 64. For example, the characteristic factor 82 may be increased, if the end temperature 46 of the temperature change was underestimated, and decreased, if the end temperature 46 of the temperature change was overestimated. In particular, the increase and decrease of the characteristic factor 82 may respectively be quantified proportionate to the above described deviation 52 in an updating step 83. An optional threshold value may be defined, wherein a deviation 52 below the threshold value is ignored during the updating step 83 in order to prevent over-correction.

The second temperature prediction model 32 may also employ the above-described steps. Additionally or alternatively, at least one of the first temperature prediction model 30 and the second temperature prediction model 32 may employ a polynomial equation with polynomial coefficients for calculating the corresponding predicted temperature.

In the shown exemplary embodiment of Fig. 1, the calculation step 40 of the second temperature prediction model 32 employing a first order polynomial for calculating the second predicted temperature 36, which is denoted by the symbol $\vartheta_2$ in the following equation:

$$\vartheta_2 = \alpha \cdot t + \beta$$

The polynomial coefficient $\beta$ is an offset value e.g., the initial temperature 44 or the latest measured temperature value 11.

In the case of a periodic temperature measurement, the polynomial coefficient $\alpha$ may be an average temperature change over the last N measurements, wherein the latest measurement is denoted by the symbol $n$:

$$\alpha = \frac{1}{N} \sum_{i=0}^{i=N-1} \Delta\vartheta(n-i) \cdot c_i$$

Preferably, the parameter *N* is equal to the range of the filter utilized in the filtering step 22.

As can further be seen from the latter equation, the polynomial coefficient $\alpha$ may be a weighted coefficient containing weight factors $c_i$. These weight factors $c_i$ may be optimized for preventing one of an overestimation and underestimation of the end temperature 46. In particular, the weight factors $c_i$ may be optimized by a supervised learning algorithm aimed at preventing one of the overestimation and underestimation of the end temperature 46. For example, the weight factors $c_i$ may be forced by the supervised learning algorithm to behave as attenuation factors.

Additionally or alternatively, the supervised learning algorithm may be aimed at improving a response time of the corresponding temperature prediction model. In particular, the supervised learning algorithm may be aimed at shortening the time, which the temperature prediction model requires in order to calculate the corresponding predicted temperature.

After each temperature change, the polynomial coefficient $\alpha$ may be updated by or based on the previous temperature change as part of the adjusting step 48. For example, the weight factors $c_i$ may be updated by the supervised learning algorithm after each temperature change. Alternatively, the weight factors $c_i$ may be fixedly set as optimized default values by the manufacturer or provider of the sensor system 2.

Of course, a polynomial of a higher order may be utilized as well in the first temperature prediction model 30 and/or the second temperature prediction model 32. Alternatively, a fitted equation adapted to reflect the temporal temperature profile 66 shown in Fig. 4 may be used in one of the first temperature prediction model 30 and second temperature prediction model 32. All of these temperature prediction models may be characterised by the predictive nature, which they provide the temperature prediction device 1 with.

**Claims**

1. Method for predicting an end temperature (46) of a temperature change for temperature surveillance purposes, the method comprising the steps of:

   - inputting at least one measured temperature value (11) into a first temperature prediction model (30), wherein the at least one measurement value is acquired by a temperature sensor,
   - calculating a first predicted temperature (34) based on the first temperature prediction model (30),
   **characterized by** the steps of
   - inputting the at least one measured temperature value (11) into a second temperature prediction model (32),
   - calculating a second predicted temperature (36) based on the second temperature prediction model (32), and
   - calculating a final predicted temperature (18) from the first predicted temperature (34) and the second predicted temperature (36).

2. Method according to claim 1, wherein the first predicted temperature (34) and the second predicted temperature (36) are calculated parallel.

3. Method according to claim 1 or 2, wherein the final predicted temperature (18) is calculated so as to lie between the first predicted temperature (34) and the second predicted temperature (36).

4. Method according to any one of claims 1 to 3, further comprising the steps of:

   - registering the end temperature (46) of the temperature change,
   - calculating a deviation (52) between the registered end temperature (46) of the temperature change and at least one of the first predicted temperature (34) and the second predicted temperature (36), and
   - adjusting at least one of the first temperature prediction model (30) and the second temperature prediction model (32) based on the deviation (52).

5. Method according to claim 4, wherein at least one of the temperature prediction models (30, 32) underestimates the end temperature (46) of the temperature change.

6. Method according to any one of claims 1 to 5, wherein the first temperature prediction model (30) employs the steps of:

   - calculating temperature change values (26) from measured temperature values (11),
   - comparing successive temperature change values (26),
   - identifying an increase (56) in the temperature change values (26),
   - identifying a maximum (58) in the temperature change values (26), and

- performing an estimation of the corresponding predicted temperature (34, 36) based on the identified maximum (58) in the temperature change values (26).

7. Method according to claim 6, wherein the estimation comprises the steps of:

- calculating an accumulated temperature change from the time of the increase (56) in the temperature change values (26) to the time of the maximum (58) in the temperature change values (26), and
- adding the accumulated temperature change multiplied by a characteristic factor (82) to the measured temperature value (11) at the time of the maximum (58) in the temperature change values (26).

8. Method according to claim 7, wherein after each estimation, the characteristic factor (82) is one of increased, if the end temperature (46) of the temperature change was underestimated, and decreased, if the end temperature (46) of the temperature change was overestimated.

9. Method according to any one of claims 1 to 8, wherein the second temperature prediction model (32) employs a polynomial equation with polynomial coefficients for calculating the corresponding predicted temperature (34, 36).

10. Method according to claim 9, wherein at least one polynomial coefficient of the polynomial equation is a weighted coefficient containing weight factors, and wherein the weight factors are optimized for preventing one of an overestimation and underestimation of the end temperature (46) of the temperature change.

11. Method according to claim 10, wherein after each temperature change, at least one polynomial coefficient is updated by the previous temperature change.

12. Method according to any one of claims 1 to 11, wherein the measured temperature values (11) are filtered before being input into the first temperature prediction model (30) and the second temperature prediction model (32).

13. Temperature prediction device (1) comprising a temperature value processing unit (8) configured to implement the method steps according to any one of claims 1 to 12 and at least one temperature sensor (10) for acquiring the measured temperature values (11) and alternatively or additionally a sensor interface for connecting a temperature sensor.


**Patentansprüche**

1. Verfahren zur Vorhersage einer Endtemperatur (46) einer Temperaturänderung für Temperaturüberwachungszwecke, wobei das Verfahren die folgenden Schritte umfasst:

- Eingeben mindestens eines gemessenen Temperaturwertes (11) in ein erstes Temperaturvorhersagemodell (30), wobei der mindestens eine Messwert durch einen Temperatursensor erfasst wird,
- Berechnen einer ersten vorhergesagten Temperatur (34) basierend auf dem ersten Temperaturvorhersagemodell (30),
**gekennzeichnet durch** die folgenden Schritte
- Eingeben des mindestens einen gemessenen Temperaturwerts (11) in ein zweites Temperaturvorhersagemodell (32),
- Berechnen einer zweiten vorhergesagten Temperatur (36) auf der Grundlage des zweiten Temperaturvorhersagemodells (32), und
- Berechnen einer endgültigen vorhergesagten Temperatur (18) aus der ersten vorhergesagten Temperatur (34) und der zweiten vorhergesagten Temperatur (36).

2. Verfahren nach Anspruch 1, wobei die erste vorhergesagte Temperatur (34) und die zweite vorhergesagte Temperatur (36) parallel berechnet werden.

3. Verfahren nach Anspruch 1 oder 2, wobei die endgültige vorhergesagte Temperatur (18) so berechnet wird, dass sie zwischen der ersten vorhergesagten Temperatur (34) und der zweiten vorhergesagten Temperatur (36) liegt.

4. Verfahren nach einem der Ansprüche 1 bis 3, das ferner die folgenden Schritte umfasst:

- Erfassen der Endtemperatur (46) der Temperaturänderung,
- Berechnen einer Abweichung (52) zwischen der registrierten Endtemperatur (46) der Temperaturänderung und mindestens einer der ersten vorhergesagten Temperatur (34) und der zweiten vorhergesagten Temperatur (36), und
- Anpassen des ersten Temperaturvorhersagemodells (30) und des zweiten Temperaturvorhersagemodells (32) basierend auf der Abweichung (52).

5. Verfahren nach Anspruch 4, wobei mindestens eines der Temperaturvorhersagemodelle (30, 32) die Endtemperatur (46) der Temperaturänderung geringer schätzt.

6. Verfahren nach einem der Ansprüche 1 bis 5, wobei das erste Temperaturvorhersagemodell (30) die folgenden Schritte umfasst:

   - Berechnen von Temperaturänderungswerten (26) aus gemessenen Temperaturwerten (11),
   - Vergleichen aufeinanderfolgender Temperaturänderungswerte (26),
   - Identifizieren eines Anstiegs (56) in den Temperaturänderungswerten (26),
   - Identifizierung eines Maximums (58) in den Temperaturänderungswerten (26), und
   - Durchführen einer Schätzung der entsprechenden vorhergesagten Temperatur (34, 36) basierend auf dem identifizierten Maximum (58) in den Temperaturänderungswerten (26).

7. Verfahren nach Anspruch 6, wobei die Schätzung die folgenden Schritte umfasst:

   - Berechnen einer akkumulierten Temperaturänderung vom Zeitpunkt des Anstiegs (56) der Temperaturänderungswerte (26) bis zum Zeitpunkt des Maximums (58) der Temperaturänderungswerte (26), und
   - Addieren der akkumulierten Temperaturänderung, multipliziert mit einem charakteristischen Faktor (82), zu dem gemessenen Temperaturwert (11) zum Zeitpunkt des Maximums (58) in den Temperaturänderungswerten (26).

8. Verfahren nach Anspruch 7, wobei nach jeder Schätzung der charakteristische Faktor (82) entweder erhöht wird, wenn die Endtemperatur (46) der Temperaturänderung geringer geschätzt wurde, oder verringert wird, wenn die Endtemperatur (46) der Temperaturänderung überschätzt wurde.

9. Verfahren nach einem der Ansprüche 1 bis 8, wobei das zweite Temperaturvorhersagemodell (32) eine polynomiale Gleichung mit polynomialen Koeffizienten zur Berechnung der entsprechenden vorhergesagten Temperatur (34, 36) verwendet.

10. Verfahren nach Anspruch 9, wobei mindestens ein Polynomkoeffizient der Polynomgleichung ein gewichteter Koeffizient ist, der Gewichtungsfaktoren enthält, und wobei die Gewichtungsfaktoren so optimiert sind, dass sie entweder eine Überschätzung oder eine Unterschätzung der Endtemperatur (46) der Temperaturänderung verhindern.

11. Verfahren nach Anspruch 10, wobei nach jeder Temperaturänderung mindestens ein Polynomkoeffizient durch die vorherige Temperaturänderung aktualisiert wird.

12. Verfahren nach einem der Ansprüche 1 bis 11, wobei die gemessenen Temperaturwerte (11) gefiltert werden, bevor sie in das erste Temperaturvorhersagemodell (30) und das zweite Temperaturvorhersagemodell (32) eingegeben werden.

13. Temperaturvorhersagevorrichtung (1) mit einer Temperaturwertverarbeitungseinheit (8), die zur Durchführung der Verfahrensschritte nach einem der Ansprüche 1 bis 12 konfiguriert ist, und mindestens einem Temperatursensor (10) zur Erfassung der gemessenen Temperaturwerte (11) sowie alternativ oder zusätzlich einer Sensorschnittstelle zum Anschluss eines Temperatursensors.

**Revendications**

1. Procédé de prédiction d'une température finale (46) d'un changement de température à des fins de surveillance de température, le procédé comprenant les étapes consistant à :

- entrer au moins une valeur de température mesurée (11) dans un premier modèle de prédiction de température (30), la au moins une valeur de mesure étant acquise par un capteur de température,
- calculer une première température prédite (34) sur la base du premier modèle de prédiction de température (30), **caractérisé par** les étapes consistant à
- entrer la ou les valeurs de température mesurées (11) dans un second modèle de prédiction de température (32),
- calculer une seconde température prédite (36) sur la base du second modèle de prédiction de température (32), et
- calculer une température prédite finale (18) à partir de la première température prédite (34) et de la seconde température prédite (36).

2. Procédé selon la revendication 1, la première température prédite (34) et la seconde température prédite (36) étant calculées en parallèle.

3. Procédé selon la revendication 1 ou 2, la température prédite finale (18) étant calculée de façon à être située entre la première température prédite (34) et la seconde température prédite (36).

4. Procédé selon l'une quelconque des revendications 1 à 3, comprenant en outre les étapes consistant à :

   - enregistrer la température finale (46) du changement de température,
   - calculer un écart (52) entre la température finale enregistrée (46) du changement de température et la première température prédite (34) et/ou la seconde température prédite (36), et
   - ajuster le premier modèle de prédiction de température (30) et/ou le second modèle de prédiction de température (32) sur la base de l'écart (52).

5. Procédé selon la revendication 4, au moins l'un des modèles de prédiction de température (30, 32) sous-estimant la température finale (46) du changement de température.

6. Procédé selon l'une quelconque des revendications 1 à 5, le premier modèle de prédiction de température (30) mettant en oeuvre les étapes consistant à :

   - calculer les valeurs de changement de température (26) à partir des valeurs de température mesurées (11),
   - comparer des valeurs de changement de température successives (26),
   - identifier une augmentation (56) dans les valeurs de changement de température (26),
   - identifier un maximum (58) dans les valeurs de changement de température (26), et
   - procéder à une estimation de la température prédite correspondante (34, 36) sur la base du maximum identifié (58) dans les valeurs de changement de température (26).

7. Procédé selon la revendication 6, l'estimation comprenant les étapes consistant à :

   - calculer un changement de température cumulé entre le moment de l'augmentation (56) dans les valeurs de changement de température (26) et le moment du maximum (58) dans les valeurs de changement de température (26), et
   - ajouter le changement de température cumulé multiplié par un facteur caractéristique (82) à la valeur de température mesurée (11) au moment du maximum (58) dans les valeurs de changement de température (26).

8. Procédé selon la revendication 7, après chaque estimation, le facteur caractéristique (82) étant soit augmenté, si la température finale (46) du changement de température a été sous-estimée, soit diminué, si la température finale (46) du changement de température a été surestimée.

9. Procédé selon l'une quelconque des revendications 1 à 8, le second modèle de prédiction de température (32) utilisant une équation polynomiale avec des coefficients polynomiaux pour calculer la température prédite correspondante (34, 36).

10. Procédé selon la revendication 9, au moins un coefficient polynomial de l'équation polynomiale étant un coefficient pondéré contenant des facteurs de pondération, et les facteurs de pondération étant optimisés pour éviter une surestimation ou une sous-estimation de la température finale (46) du changement de température.

**11.** Procédé selon la revendication 10, après chaque changement de température, au moins un coefficient polynomial étant mis à jour en fonction du changement de température précédent.

**12.** Procédé selon l'une quelconque des revendications 1 à 11, les valeurs de température mesurées (11) étant filtrées avant d'être entrées dans le premier modèle de prédiction de température (30) et le second modèle de prédiction de température (32).

**13.** Dispositif de prédiction de température (1) comprenant une unité de traitement des valeurs de température (8) conçue pour mettre en oeuvre les étapes du procédé selon l'une quelconque des revendications 1 à 12 et au moins un capteur de température (10) pour acquérir les valeurs de température mesurées (11) et, en variante ou en plus, une interface de capteur pour connecter un capteur de température.

Fig. 1

Fig. 2

Fig. 3

66

18

52

34 — 36

68

46,50

62

74

56

72

44

70

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100169050 A1
- US 2017176234 A1
- JP S60114729 A
- US 2010324851 A1